Europäisches Patentamt

European Patent Office

Office européen des brevets

(19)

(11) Publication number: **0 017 923**
**B1**

(12) **EUROPEAN PATENT SPECIFICATION**

(45) Date of publication of patent specification: **22.06.83**

(51) Int. Cl.³: **A 47 J 19/02**

(21) Application number: **80101935.7**

(22) Date of filing: **10.04.80**

(54) Juice Extractor.

(30) Priority: **12.04.79 JP 47599/79**

(43) Date of publication of application:
**29.10.80 Bulletin 80/22**

(45) Publication of the grant of the patent:
**22.06.83 Bulletin 83/25**

(84) Designated Contracting States:
**DE FR GB IT**

(56) References cited:
**DE - C - 545 515**
**DE - C - 643 617**
**FR - A - 945 926**
**US - A - 2 166 547**
**US - A - 2 223 772**

(73) Proprietor: **Hasegawa, Tokuichiro**
**No.18-6, 5-chome Kanayama**
**Naka-ku Nagoya-shi Aichi-ken (JP)**

(72) Inventor: **Hasegawa, Tokuichiro**
**No.18-6, 5-chome Kanayama**
**Naka-ku Nagoya-shi Aichi-ken (JP)**

(74) Representative: **Heusler, Wolfgang, Dipl.-Ing. et al,**
**Von Bezold, Dieter, Dr. Schütz, Peter, Dipl.-Ing.**
**Heusler, Wolfgang, Dipl.-Ing. Postfach 86 02 60**
**D-8000 München 86 (DE)**

Courier Press, Leamington Spa, England.

## Juice extractor

This invention relates to a juice extractor of the kind defined in the pre-characterising portion of Claim 1.

A juice extractor of this kind is disclosed in DE—C—643 617. This juice extractor comprises a housing in which a worm is arranged for rotation. The worm includes a first spiral having a flat crest and a second flat crest spiral of reduced diameter. A shoulder is defined between the two spirals at an end face of the first spiral. The first spiral is located in a portion of the housing which includes cutting edges defined in the inner wall surface thereof and which has an aperture defining a juice outlet. A filter element is located in the aperture to separate the draff from the juice. The shoulder, a portion of the second spiral and an adjacent inner wall surface portion of the housing define a chamber in which the pulp fed by the first spiral is further compressed. The second spiral serves to feed the compressed pulp towards a draff discharge opening defined in the housing.

The known juice extractor is disadvantageous in that the compression chamber is too large for the pulp to be compressed to such an extent that the remainder of the juice contained in the pulp already compressed by the action of the first spiral can be fully recovered. Moreover the filter tends to obstruct the juice outlet so that not all of the juice extracted will flow through the juice outlet. Furthermore, the filter is likely to clog with draff after a certain period of time of operating the juice extractor in which case the yield of juice is reduced significantly.

FR—A—954 926 discloses a juice extractor comprising a housing in which a worm is arranged for rotation. The worm defines a spiral with a flat crest and carries a vane at its lower end. A juice outlet is provided below the vane, and a draff discharge opening is defined above the juice outlet. The juice outlet is covered by a filter. There will be no further compression of the pulp once the pulp has passed the spiral of the worm so that the yield of the juice will not be very high. Moreover, there is the risk of the filter being clogged with draff.

DE—C—545 515 discloses a juice extractor which comprises a housing and a worm located rotatably within the housing. The worm is surrounded by a filter element and the housing has an aperture surrounding the filter element. There is no draff discharge opening. Therefore, the draff will stay between the windings of the spiral and rotate all the time with the worm during operation of the juice extractor. Such an arrangement will not permit a high compression of the pulp so that the yield of the juice is expected to be low. Moreover, the filter will be clogged after a certain time period causing a further reduction of yield.

US—A—2 166 547 shows a juice extractor which comprises a housing and a worm located for rotation within the housing, the worm being driven by a motor. The housing is provided with a draff discharge opening at one end and several juice outlets at the other end. The spiral has a flat crest, and cutting edges are defined in the inner surface of the housing. The pulp is compressed only by the action of the flat flank spiral so that the yield of the juice cannot be very high. There is no filter to separate the draff from the juice so that draff particles will be in the juice dropping through the outlets which are defined in the housing.

US—A—2 223 772 discloses a juice extractor of a relatively complicated structure comprising a large number of elements. The juice extractor includes a housing in which is located a sleeve through which a rotatable worm extends. Guide bars are located between the worm and the sleeves. The pulp is forced by the action of the worm through a member which is provided with slits. The spiral has flat crests and the pulp is compressed only by the action of the flat crest spiral. Since the action of the spiral does not provide sufficient compression of the pulp for all of the juice contained therein to be squeezed out the yield of the juice extractor can be expected to be not very high.

It is an object of the invention to provide a novel juice extractor of the kind referred to in which a powerful further compression takes place after the pulp has been compressed by the flat crest spiral and in which the flow of juice is not obstructed by a separate filter element so that a high yield of juice can be obtained.

This object of the invention is achieved by a juice extractor having the features defined in the characterizing part of Claim 1.

An advantage of the juice extractor according to the invention resides in that its construction is rather simple so that it can be assembled and disassembled for cleaning purposes very easily. Moreover the novel juice extractor has a very compact structure and it requires only a low production cost.

Brief description of the drawings

Fig. 1 is a front cross-sectional view showing a juice extractor according to one embodiment of the invention,

Fig. 2 is a right side view of the juice extractor shown in Fig. 1,

Fig. 3 is a cross-sectional view along A—A in Fig. 1,

Fig. 4 is a cross-sectional view along B—B in Fig. 1,

Fig. 5 is a front cross-sectional view showing a juice extractor according to another embodiment of the invention,

Fig. 6 is a right side view of the juice extractor shown in Fig. 5,

Fig. 7 is a cross-sectional view of the juice extractor housing including the worm of the juice extractor shown in Fig. 5,

Fig. 8 is a bottom view of the worm shown in Fig. 7,

Fig. 9 is a cross-sectional view along C—C, the worm being removed, and

Fig. 10 is a plan view of the part shown in Fig. 9.

Detailed description of preferred embodiments

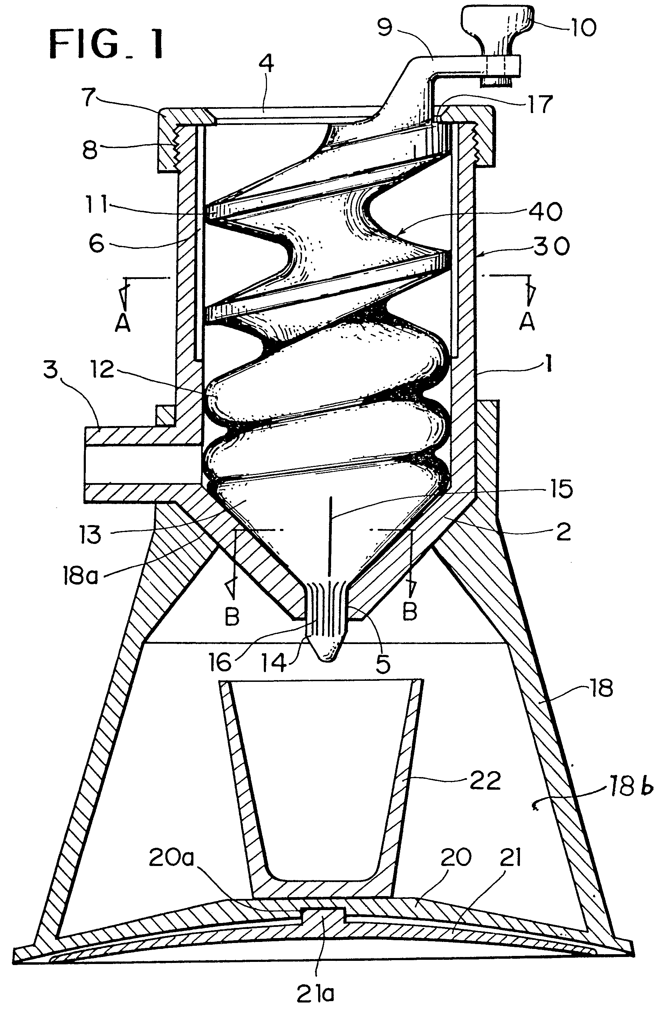

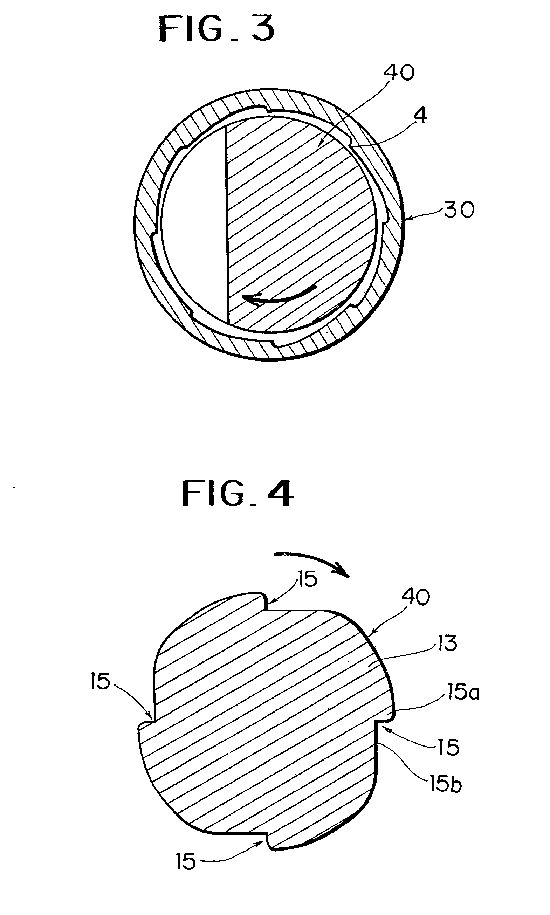

Referring to Fig. 1 to 4 of the drawings, a juice extractor according to one embodiment of the invention comprises a juicer housing 30 and a worm 40 which is arranged rotatably in the juicer housing 30. The juicer housing 30 has an upper cylindrical body portion 1, a lower conical body portion 2 and a draff discharge pipe 3 projecting from it. The juicer housing 30 has an open top defining a mouth 4 through which the pulp or other substances from which juice is to be extracted are fed into the housing 30, and has an aperture 5 at the bottom end at the conical portion 2 for inserting a projection 14 of the worm 40. A plurality of cutting edges 6 are arranged circumferentially at an upper portion of the inner wall surface of the cylindrical body portion 1 and are formed integrally therewith. The upper wall surface portion defining the cutting edges has a horizontal cross-sectional contour corresponding to that of a saw as shown in Fig. 3. The cylindrical body portion 1 of the juicer housing 30 has an outer upper circumferentially threaded portion 8 onto which an annular lid 7 is screwed by which the worm is held axially.

The worm 40 is provided with a lateral arm 9 which is formed integrally at the upper end of the worm and which carries a knob 10 defining a handle by which the worm is to be rotated manually. The worm 40 comprises an upper portion defining a spiral 11 having a flat crest, an intermediate portion defining a spiral 12 having an arcuate crest and a lower portion 13 having a frusto-conical shape corresponding to that of the conical portion 2 of the housing 30, the upper worm portion being adjacent to the cutting edges 6 and cooperating with them in use of the juice extractor. The projection 14 projects from the bottom end of the frusto-conical lower portion of the worm 40. The frusto-conical portion 13 has a plurality of steps 15 defined in its outer surface as shown in Fig. 4 and projection 14 has a plurality of grooves 16 formed in its outer surface, which grooves 16 define passages for the flow of juice when the extractor is in use.

Thus the worm 40 is arranged within the juicer housing 30 and the projection 14 is inserted rotatably in the aperture 5, and the annular lid abuts a horizontal portion 17 of the worm 40 to hold the worm 40 axially.

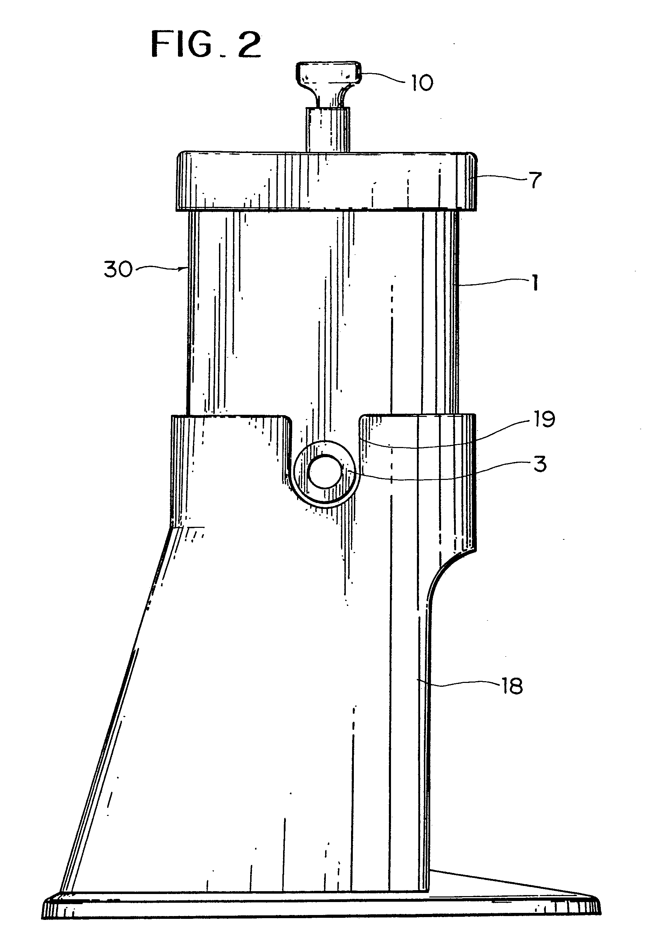

The juicer housing 30 is held vertically on a support 18 which has a mouth 18b at a front end and is provided with a frusto-conical portion 18a defining a seat for the conical portion 2 of the juicer housing 30, and further has a recess 19 as shown in Fig. 2 at a suitable location in the upper part of the side wall to receive the discharge pipe 3 so that the housing 30 is prevented from rotation with the worm 40. The support 18 is provided with a cup seat 20 at its bottom and an absorber 21 made of a material such as rubber. The cup seat 20 is formed at its bottom with a recess 20a in which a projection 21a defined at the center of the absorber 21 is received.

The juicer housing 30 and the worm 40 are respectively formed of a hard synthetic resin. The prior art juice extractors have been provided with metallic cutters, however, vitamin C in the fruit juice is destroyed if contacted with metal. Therefore, synthetic resin is used for the juicer housing 30 and the worm 40 including the cutters of the juice extractor according to the invention.

When the juice extractor according to the embodiment described above is in use the pulp or other substances from which juice is to be extracted are fed through the mouth 4. When the worm 40 is rotated by means of the knob 10 the pulp is fed down through the spiral 11 with the flat crest and crushed by the cutters 6. The crushed pulp is urged between the arcuate crest of the spiral 12 and the inner wall surface of the cylindrical body 1, thereby squeezing the fruit juice out of the pulp. The squeezed pulp is further squeezed by the steps 15a (refer to Fig. 4) of the conical portion 13 of the worm 40 and raked upwardly by steps 15b and discharged through the pipe 3. The juice runs along the grooves 16 of the projection 14 and drops into the cup 22. The grooves 16 also serve as a filter preventing the squeezed pulp from dropping into the cup 22. Since the grooves 16 are rotated when the worm 40 rotates they are not clogged with the draff or extracted pulp.

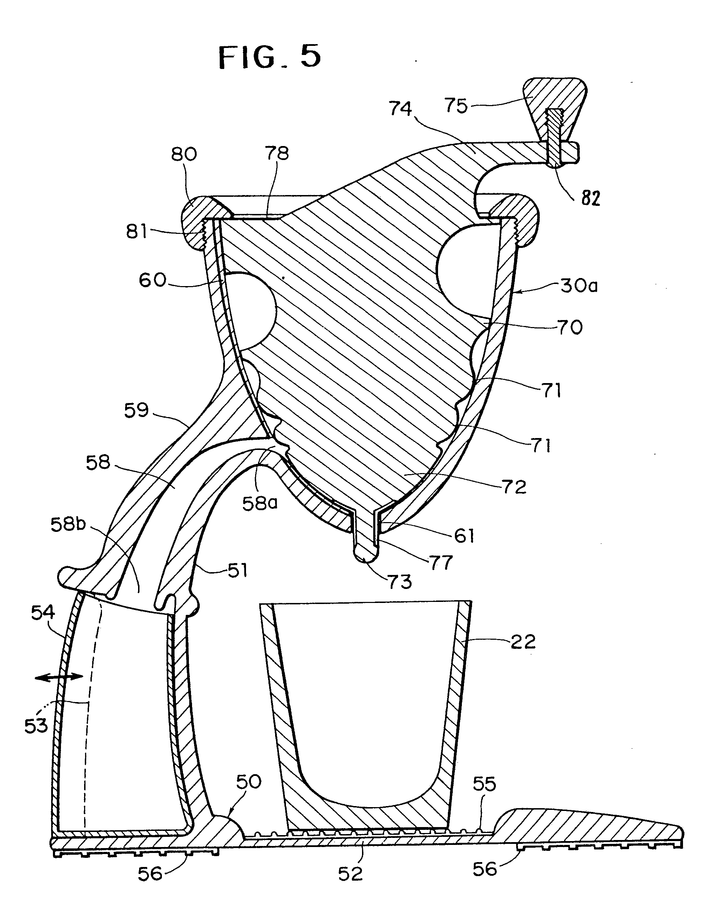

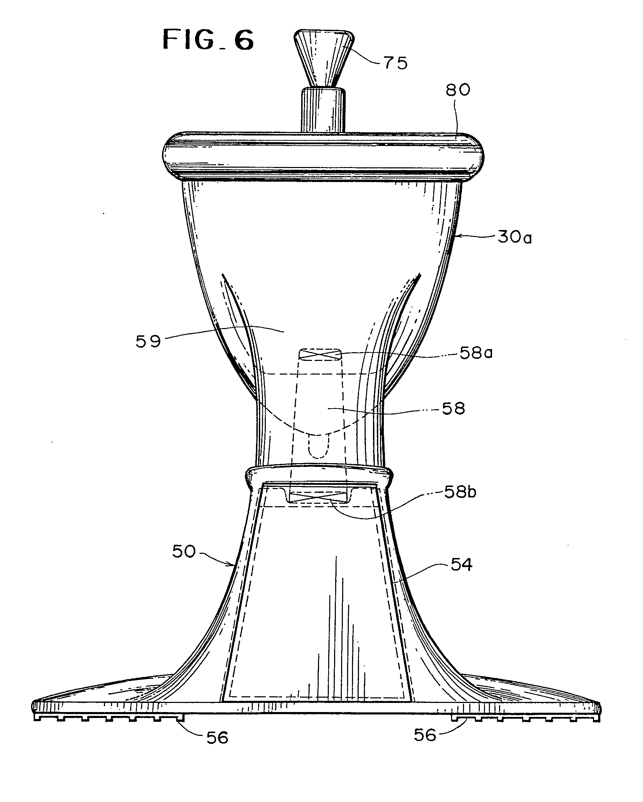

Figures 5 to 10 show another embodiment of the invention. In the drawings, the numeral 30a designates a juicer housing of hard synthetic resin and 40a designates a worm of hard synthetic resin which worm is inserted rotatably in the juicer housing. The juicer housing 30a is U-shaped in cross-section, defining a bowl. The juicer housing of the juice extractor according to this embodiment of the invention has a support 50 integrally formed therewith. The support 50 comprises a curved supporting part 51 and a bottom 52. The supporting part 51 has a cut-away portion 53 at its lower end and a draff holding cup 54 of transparent plastics is positioned in the cut-away portion, the cup 54 being movable laterally for detachment from the support. The cup 54 is about 3/4 within the cut-away portion 53 and is 1/4 exposed. The supporting part 51 has a neck portion 59 defining a squeezed draff discharge passage 58 having a mouth 58a which communicates with the juicer housing 30a. The diameter of the discharge passage 58 increases progressively in the downward direction. The outlet 58b of the passage 58 communicates with the cut-away portion 53. The bottom 52 is covered with stoppers 55, 56 to prevent slipping at its upper and lower surfaces, and the cup 22 is positioned on the upper stoppers 55.

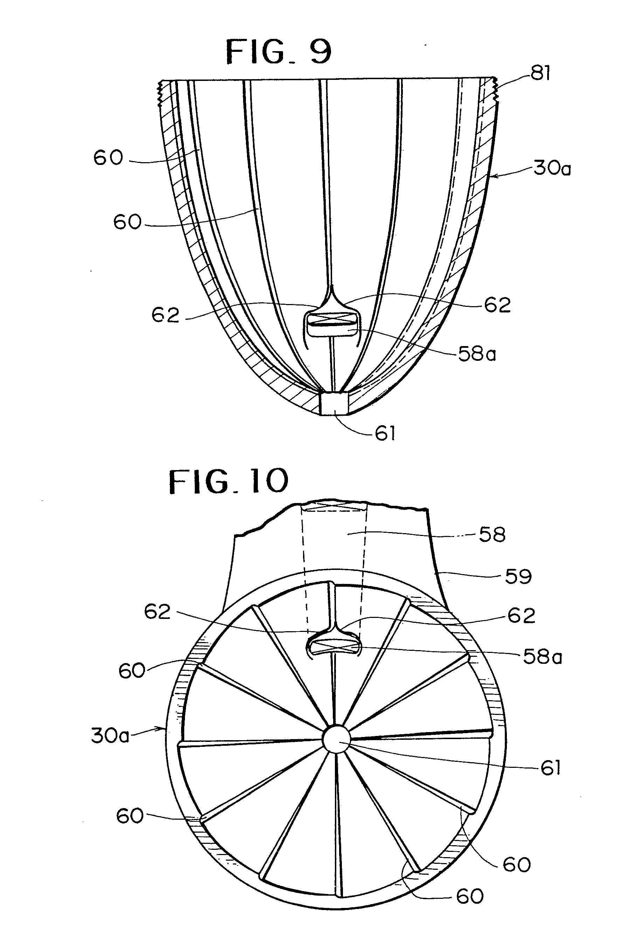

Fig. 9 and Fig. 10 show cutting edges 60 which are formed integrally with the inner wall surface of the juicer housing 30a, the inner wall surface having a horizontal cross-sectional contour corresponding to that of a saw wherein the cutting edges define the saw teeth. The cutting edges extend from an upper end of the juicer housing 30a to an aperture 61 defined in the bottom of the juicer housing 30a to receive a projection of the worm. A passage 62 circumscribes the mouth 58a of the passage 58 in order to avoid the draff soaking up the extracted juice.

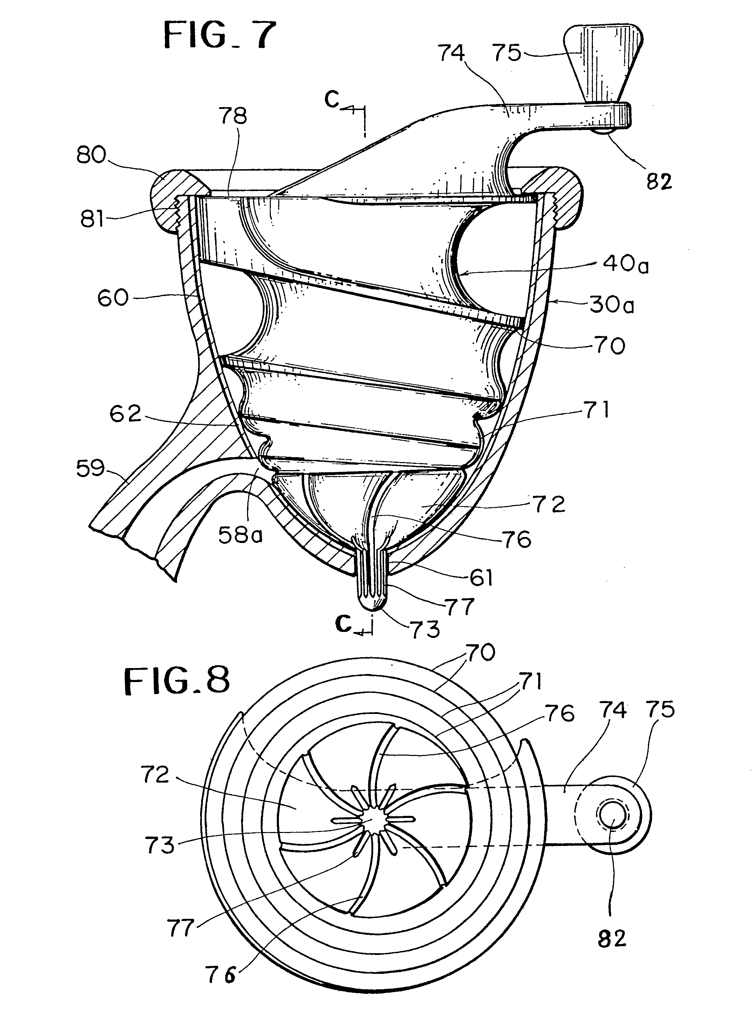

Fig. 7 and Fig. 8 show in detail the worm 40a employed in this embodiment of the invention. The worm 40a is adapted to be rotated at its upper lateral arm 74 by means of a knob 75 which is connected to the arm by a pin 82. The worm 40a has an upper portion having a spiral 70 with a flat crest, an intermediate portion having a spiral 71 with an arcuate crest and a lower portion 72 defining substantially a frusto-cone whose generator is an arcuate line, which corresponds to the bowl shape of the juicer housing 40a at its bottom. The projection 73 is formed at the lowermost end of the cone portion 72 and extends through the aperture 61 of the juicer housing 30a. The cone portion 72 has a plurality of helical steps 76 defined in its outer surface and the projection 73 is provided with vertical grooves 77 which are arranged so as alternately to communicate with the steps 76 and start from a lower portion of the cone 72 (cf. Fig. 8). In this embodiment the mouth 58a is positioned at a border between the cone portion 72 and the arcuate crest spiral 71. The numeral 80 designates an annular lid which is screwed onto a circumferential threaded portion 81 formed at the upper outer end of the juicer housing 30a and abuts an upper peripheral annular surface portion 78 of the worm 48.

Since it is possible to operate the juice extractor by holding it with one hand and rotating the worm by the other hand the hands can be kept clean.

The juicer housing and the worms have a very simple structure, and a filter is not required. Being integrally constructed, the juice extractor is low in production cost. Further the assembly and the disassembly of the juice extractor can be performed easily by attaching and detaching the annular lid. Since the matter to be extracted is instantaneously crushed and squeezed without being oxidized the juice obtained is of high nutritive quality.

The juice extractor can be made as large as desired and a shaft may be connected to the center of the worm for driving the worm con-

tinuously so that the juice extractor can be used commercially.

## Claims

1. A juice extractor comprising a housing (30, 30a) having a mouth (4) at an upper end through which fruit or the like is to be fed into the housing (30, 30a), an aperture (5, 61) at a lower end defining a juice outlet and an opening (58a) for the discharge of draff, which opening (58a) is intermediate said mouth (4) and said aperture (5, 61), the housing (30, 30a) having an inner wall surface defining cutting edges (6, 60), a worm (40, 40a) which is arranged for rotation within the housing (30, 30a) and comprises a first worm portion defining a spiral (11, 70) having a flat crest and cooperating with the inner wall surface of the housing (30, 30a) to move the fruit across the cutting edges (6, 60) towards the draff discharge opening (58a), thereby compressing and severing the fruit, a second worm portion which cooperates with the inner wall surface of the housing (30, 30a) to further compress the severed fruit between its surface and the inner wall surface of the housing (30, 30a), and a third worm portion (13, 72) which cooperates with the inner wall surface of the housing (30, 30a) to push the draff through the draff discharge opening (58a), characterized in that the second worm portion defines a spiral (12, 71) having an arcuate flank, and the third worm portion (13, 72) is a substantially frusto-conical body whose generator is a straight or arcuate line and has steps (15, 76) defined in its outer surface to form juice passages and a projection (14, 73) defined at its lowermost end, the projection (14, 73) extending through the aperture (5, 61) defining the juice outlet and having grooves (16, 77) defined in its outer surface to form juice passages.

2. A juice extractor as claimed in Claim 1, wherein an annular lid (7, 80) is provided which is engaged removably with a threaded portion (8, 81) formed at the upper end of the housing (30, 30a) at its outer surface, the lid (7, 80) engaging slidably a peripheral surface portion (17, 78) of one end of the worm (40, 40a) to locate the worm (40, 40a) axially.

3. A juice extractor as claimed in Claim 1, wherein the cutting edges (6) are defined at a position on the inner wall surface of the housing (30) corresponding to that at which the flat crest spiral (11) of the second portion of the worm (40, 40a) is located.

4. A juice extractor as claimed in Claim 1, wherein the cutting edges (60) extend from the upper end of the housing (30a) to the aperture (61) defining the juice outlet at the lower end of the housing (30a).

5. A juice extractor as claimed in Claim 1, wherein the steps (76) defined in the third portion (72) of the worm (40a) are helical.

6. A juice extractor as claimed in Claim 1, wherein at least some of the grooves (77) formed in the projection (73) communicate with the steps (76) formed in the third portion (72) of the worm (40a).

7. A juice extractor as claimed in Claim 1, wherein a support (18) is provided which has a wall portion in which an opening (18b) is defined through which a juice collecting container (22) may be put below the juice outlet, and has an upper inner wall portion (18a) defining a seat for a lower portion of the housing (30).

8. A juice extractor as claimed in Claim 7, wherein the support (18) has a cup seat (20) at its bottom and an absorber (21) at a rear side of the cup seat (20).

9. A juice extractor as claimed in Claim 1, wherein a support (50) is provided which comprises a supporting part (51) integrally fixed to a side of the housing (30a) and a horizontal bottom (52) integrally fixed to the supporting part (51), the supporting part defining a passage (58) in it for the discharge of draff, the passage (58) communicating with the discharge opening (58a) defined in the housing (30a), the supporting part (51) having a cutaway portion (53) at its lower end to receive a draff collecting container (54).

10. A juice extractor as claimed in Claim 1, wherein the draff discharge opening (58a) is provided at a position corresponding to a border between the arcuate crest spiral (11, 70) of the worm (40, 40a) and the third portion (13, 72) of the worm (40, 40a).

**Patentansprüche**

1. Saftpresse mit einem Gehäuse (30, 30a), das an einem oberen Ende einen Mund (4) hat, durch den Obst oder dgl. in das Gehäuse (30, 30a) eingeführt wird, ferner eine einen Saftauslaß bildende Öffnung (5, 61) an einem unteren Ende sowie eine zwischen dem Mund (4) und dieser Öffnung (5, 61) befindliche Öffnung (58a) zum Auswerfen von Treber, eine Innenwandfläche, die Schneidkanten (6, 60) bildet, und eine Schnecke (40, 40a), die drehbar im Gehäuse (30, 30a) angeordnet ist und einen ersten Wurmteil aufweist, der eine Spirale (11, 70) mit einem abgeflachten Grat bildet und mit der Innenwandfläche des Gehäuses (30, 30a) zusammenwirkt, um das Obst über die Schneidekanten (6, 60) hinweg zu der Treberauswurföffnung (58a) zu bewegen und dabei das Obst zu pressen und zu zerschneiden, ferner einen zweiten Wurmteil, der mit der Innenwandfläche des Gehäuses (30, 30a) zusammenwirkt, um das zerschnittene Obst zwischen seiner Oberfläche und der Innenwandfläche des Gehäuses (30, 30a) weiter zu pressen, sowie einen dritten Wurmteil (13, 72), der mit der Innenwandfläche des Gehäuses (30, 30a) zusammenwirkt, um den Treber durch die Treberauswurföffnung (58a) zu stoßen, dadurch gekennzeichnet, daß der zweite Wurmteil eine Spirale (12, 71) mit einer gewölbten Flanke bildet, und daß der dritte Wurmteil (13, 72) ein im wesentlichen kegelstumpfförmiger Körper mit gerader oder gekrümmter Mantellinie ist und in seiner Außenfläche gebildete Stufen (15, 77) zur Bildung von Saftkanälen und einen an seinem untersten Ende gebildeten Vorsprung (14, 73) aufweist, welcher sich durch die den Saftauslaß bildende Öffnung (5, 61) erstreckt und in seiner Außenfläche Rillen (16, 77) zur Bildung von Saftkanälen hat.

2. Saftpresse nach Anspruch 1, in welcher ein ringförmiger Deckel (7, 8) vorgesehen ist, der entfernbar in Eingriff mit einem am oberen Ende des Gehäuses (30, 30a) an seiner Außenfläche ausgebildeten Gewindeteil (8, 81) steht und zur axialen Festlegung der Schnecke (40, 40a) gleitend an einem am Umfang befindlichen Flächenteil (17, 78) eines Ende der Schnecke (40, 40a) anliegt.

3. Saftpresse nach Anspruch 1, in welcher die Schneidkanten (6) an einer Stelle auf der Innenwandfläche des Gehäuses (30) gebildet sind, die derjenigen entspricht, bei der die Spirale (11) mit abgeflachtem Grad des zweiten Teils des Wurms (40, 40a) angeordnet ist.

4. Saftpresse nach Anspruch 1, in welcher sich die Schneidkanten (60) vom oberen Ende des Gehäuses (30a) zu der den Saftauslaß am unteren Ende des Gehäuses (30a) bildenden Öffnung (61) erstrecken.

5. Saftpresse nach Anspruch 1, in welcher die in dem dritten Teil (72) der Schnecke (40a) gebildeten Stufen (76) spiralförmig sind.

6. Saftpresse nach Anspruch 1, in welcher mindestens einige der in dem Vorsprung (73) gebildeten Rillen (77) mit den in dem dritten Teil (72) der Schnecke (40a) gebildeten Stufen (76) in Verbindung stehen.

7. Saftpresse nach Anspruch 1, in welcher ein Träger (18) vorgesehen ist, welcher einen Wandteil hat, in dem eine Öffnung (18b) gebildet ist, durch die ein Saftauffangbehälter (22) unter den Saftauslaß gebracht werden kann, und welcher einen oberen Innenwandteil (18a) zur Bildung eines Sitzes für einen unteren Teil des Gehäuses (30) aufweist.

8. Saftpresse nach Anspruch 7, in welcher der Träger (18) an seinem Boden eine Becherauflagefläche (20) und einen Absorber (21) auf einer Rückseite der Becherauflagefläche (20) hat.

9. Saftpresse nach Anspruch 1, in welcher ein Träger (50) vorgesehen ist, welcher durch einen einstückig an einer Seite des Gehäuses (30a) befestigten Tragteil (51) und einen einstückig an dem Tragteil (51) befestigten horizontalen Boden (52) gebildet ist, wobei der Tragteil in sich einen Kanal (58) zum Auswerfen von Treber bildet, welcher mit der im Gehäuse (30a) gebildeten Auswurföffnung (58a) in Verbindung steht und wobei aus dem Tragteil (51) an seinem unteren Ende ein Teil (53) für die Aufnahme eines Trebersammelgefässes (54) weggeschnitten ist.

10. Saftpresse nach Anspruch 1, in welcher die Treberauswurföffnung (58a) an einer Stelle vorgesehen ist, welche einer Grenze zwischen der Spirale (11, 70) der Schnecke (40, 40a) mit abgeflachtem Grad und dem dritten Teil (13, 72) der Schnecke (40, 40a) entspricht.

**Revendications**

1. Un extracteur de jus comprenant un boîtier (30, 30a) ayant une embouchure (4) à une extrémité supérieure par laquelle des fruits ou similaires seront à introduire dans le boîtier (30, 30a), une ouverture (5, 61) à l'extrémité inférieure définissant un orifice de sortie pour le jus et une ouverture (58a) pour l'évacuation de la pulpe épuisée, laquelle ouverture (58a) est intermédiaire entre ladite embouchure (4) et ladite ouverture inférieure (5, 61), le boîtier (30, 30a) ayant une surface de paroi interne formant des arêtes coupantes (6, 60), une vis (40, 40a) qui est disposée pour tourner dans le boîtier (30, 30a) et qui comprend une première partie formant une spirale (11, 70) ayant une crête plate et coopérant avec la surface de la paroi interne du boîtier (30, 30a) pour mouvoir le fruit le long des arêtes coupantes (6, 60) vers l'ouverture (58a) d'évacuation de la pulpe épuisée, de manière à comprimer et fragmenter le fruit, une deuxième partie de la vis coopérant avec la surface de la paroi interne de boîtier (30, 30a) pour comprimer encore le fruit fragmenté entre sa surface et la surface de la paroi interne du boîtier (30, 30a) et une troisième partie (13, 72) de la vis coopérant avec la surface de la paroi interne du boîtier (30, 30a) pour pousser la pulpe épuisée à travers l'ouverture (58a) d'évacuation de la pulpe épuisée, caractérisé en ce que la deuxième partie de la vis forme une spirale (12, 71) ayant un flanc arrondi, et en ce que la troisième partie de la vis (13, 72) est un corps sensiblement tronconique dont la génératrice est une ligne droite ou courbe et possède des gradins (15, 76) formés à sa surface externe pour constituer des passages pour le jus, et un prolongement (14, 73) formé à son extrémité inférieure, le prolongement (14, 73) s'étendant à travers l'ouverture (5, 61) formant l'orifice de sortie du jus et ayant des rainures (16, 77) formées dans sa surface externe pour constituer des passages pour le jus.

2. Un extracteur de jus tel que revendiqué dans la revendication 1, dans lequel est prévu un couvercle annulaire (7, 80) s'engageant de manière amovible sur une partie filetée (8, 81) ménagée à l'extrémité supérieure du boîtier (30, 30a), le couvercle (7, 80) s'engageant de manière glissante sur une partie d'une surface périphérique (17, 78) d'une extrémité de la vis (40, 40a) pour positionner la vis (40, 40a) axialement.

3. Un extracteur de jus tel que revendiqué dans la revendication 1, dans lequel les arêtes coupantes (6) sont formées sur la surface de la paroi interne du boîtier (30) en une position correspondant à celle de la spirale (11) à crête plate de la deuxième partie de la vis (40, 40a).

4. Un extracteur de jus tel que revendiqué dans la revendication 1, dans lequel les arêtes coupantes (60) s'étendent de l'extrémité supérieure du boîtier (30a) jusqu'à l'ouverture (61) constituant l'orifice de sortie du jus à l'extrémité inférieure du boîtier (30a).

5. Un extracteur de jus tel que revendiqué dans la revendication 1, dans lequel les gradins (76) formés dans la troisième partie (72) de la vis (40a) sont hélicoïdaux.

6. Un extracteur de jus tel que revendiqué dans la revendication 1, dans lequel au moins quelques unes des rainures (77) formées dans le prolongement (73) communiquent avec les gradins (76) formés dans la troisième partie (72) de la vis (40a).

7. Un extracteur de jus tel que revendiqué dans la revendication 1, dans lequel est prévu un support (18) ayant une paroi dans laquelle est formée une ouverture (18b) par laquelle un récipient (22) de collecte du jus peut être placé sous l'orifice de sortie du jus, et ayant une partie supérieure (18a) de sa paroi interne formant un siège pour une partie inférieure du boîtier (30).

8. Un extracteur de jus tel que revendiqué dans la revendication 7, dans lequel le support (18) possède sur son fond un siège (20) pour un gobelet, et possède un amortisseur (21) à l'envers du siège (20) de gobelet.

9. Un extracteur de jus tel que revendiqué dans la revendication 1, dans lequel est prévu un socle (50) comprenant un support (51) intégralement fixé à un côté du logement (30a) et un fond horizontal (52) intégralement fixé au support (51), le support définissant, en son intérieur, un passage (58) communiquant avec l'ouverture (58a) d'évacuation formée dans le boîtier (30a), le support (51) ayant une partie (53) découpée à son extrémité inférieure pour recevoir un récipient (54) de collecte de la pulpe épuisée.

10. Un extracteur de jus tel que revendiqué dans la revendication 1, dans lequel l'ouverture (58a) d'évacuation de la pulpe épuisée est prévue dans une position correspondant à une limite entre la spirale (11, 70) à crête arrondie de la vis (40, 40a) et la troisième partie (13, 72) de la vis (40, 40a).

FIG. 1

FIG. 2

## FIG. 3

## FIG. 4

# FIG. 5

FIG. 6

# FIG. 7

# FIG. 8

0 017 923

# FIG. 9

# FIG. 10